# EUROPÄISCHE PATENTSCHRIFT

(11) **EP 3 196 601 B1**
(45) Veröffentlichungstag und Bekanntmachung des Hinweises auf die Patenterteilung: **31.03.2021**
(21) Anmeldenummer: 16203961.4
(22) Anmeldetag: 14.12.2016
(51) Int. Cl.: G01F 1/66

(54) **ULTRASCHALLWANDLER**
ULTRASOUND CONVERTER
CONVERTISSEUR D'ULTRASONS

(30) Priorität: 22.01.2016 DE 102016101154
(43) Veröffentlichungstag der Anmeldung: 26.07.2017
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patentanwälte

(56) Entgegenhaltungen:
- WO-A1-2013/037616
- WO-A1-2015/198386
- US-A- 4 297 607
- US-A- 4 316 115
- US-A1- 2002 000 763
- US-B1- 7 628 081

## Beschreibung

Die Erfindung betrifft einen Ultraschallwandler für den Einbau in ein Ultraschall-Durchflussmessgerät zur Messung des Durchflusses eines strömenden Mediums, umfassend ein elektromechanisches Wandlerelement für die Erzeugung von Ultraschallsignalen, einen Träger und ein Gehäuse, wobei das elektromechanische Wandlerelement in dem Träger angeordnet ist, wobei das Gehäuse zumindest teilweise aus einem leitfähigen Material besteht, wobei der Träger ein Trägermaterial mit einer akustischen Impedanz aufweist und wobei der Wert der akustischen Impedanz des Trägermaterials zwischen dem Wert der akustischen Impedanz des elektromechanischen Wandlerelements und dem Wert der akustischen Impedanz des strömenden Mediums liegt.

Die Messung von Strömungsgeschwindigkeiten verschiedener Medien mit Hilfe von Ultraschall-Durchflussmessgeräten ist aus dem Stand der Technik bekannt.

Ein Messprinzip, das dieser Messung zugrunde liegt, ist das Laufzeit-Differenzverfahren. Dabei wird ausgenutzt, dass der Ausbreitungsgeschwindigkeit eines Ultraschallsignals im strömenden Medium die Fließgeschwindigkeit des zu vermessenden Mediums überlagert wird. Daher ist die Laufzeit eines Signals abhängig davon, ob das Signal das strömende Medium in Fließrichtung oder entgegengesetzt dazu durchläuft. Signale, die in Fließrichtung übertragen werden, werden schneller übertragen als Signale, die dieselbe Strecke entgegengesetzt der Fließrichtung zurücklegen.

Für die Bestimmung der Fließgeschwindigkeit wird mittels eines Ultraschallwandlers, insbesondere mittels eines elektromechanischen Wandlerelementes, ein Ultraschallsignal erzeugt, welches in das strömende Medium eingespeist und nach dem Durchlauf durch das strömende Medium von einem Empfangssensor detektiert wird. In der Praxis werden besonders häufig Piezoelemente als elektromechanische Wandlerelemente eingesetzt. Die gemessene Laufzeit des Ultraschallsignals wird mit der Laufzeit eines Signals, das dieselbe Strecke jedoch in entgegengesetzter Richtung zurücklegt, verglichen. Aus dem Laufzeitunterschied der beiden Ultraschallsignale kann sowohl die Fließgeschwindigkeit des strömenden Mediums sowie bei bekanntem Rohrdurchmesser der Volumendurchfluss bestimmt werden.

Die Qualität der Übertragung der von dem elektromechanischen Wandlerelement erzeugten Ultraschallsignale in das strömende Medium ist insbesondere abhängig von den zwischen dem elektromechanischen Wandlerelement und dem Medium angeordneten Materialien und deren Transmissionseigenschaften in Bezug auf die Übertragung von Ultraschallsignalen. Im Rahmen der vorliegenden Erfindung ist zwischen dem elektromechanischen Wandlerelement und dem zu vermessenden Medium der Träger angeordnet. Die Übertragung der Ultraschallsignale in das zu vermessende Medium ist insbesondere abhängig von der akustischen Impedanz des Trägermaterials bzw. von dem Impedanzunterschied zwischen der akustischen Impedanz des elektromechanischen Wandlerelementes und der akustischen Impedanz des Trägermaterials bzw. der akustischen Impedanz des Trägermaterials und der Impedanz des strömenden Mediums. Ist zwischen dem elektromechanischen Wandlerelement und dem Medium ein Trägermaterial mit hoher Impedanzabweichung im Hinblick auf den Wert der akustischen Impedanz des Mediums und des elektromechanischen Wandlerelementes angeordnet, so ist die Transmission in das Medium gering. Dem liegt zugrunde, dass an den Grenzflächen von Materialien mit einem hohen Impedanzunterschied das Ultraschallsignal größtenteils reflektiert und nur ein geringer Anteil des Signals transmittiert wird. Aus dem Stand der Technik ist es daher bekannt, zwischen dem elektromechanischen Wandlerelement und dem strömenden Medium ein Trägermaterial niedriger Impedanz beispielsweise aus einem Polymer vorzusehen. Der zwischen dem elektromechanischen Wandlerelement und dem Medium angeordnete Träger mit einem Trägermaterial angepasster Impedanz wird als akustisches Fenster bezeichnet.

Aus der Druckschrift WO 2013/037616 ist ein Ultraschallwandler für ein Ultraschall-Durchflussmessgerät bekannt, welcher ein elektromechanisches Wandlerelement in einem elektrisch nicht leitenden Gehäuse mit einem akustischen Fenster, beispielsweise aus einem Polymer, aufweist, wobei zwischen dem elektromechanischen Wandlerelement und dem akustischen Fenster des Gehäuses eine elektrisch leitfähige Anpassungsschicht für die akustische Kopplung des Wandlerelementes mit dem akustischen Fenster des Gehäuses vorgesehen ist. Die Anpassungsschicht ist mit einer Signal- oder Masseleitung verbunden. Durch die Verbindung mit einem Massepotential wird das elektromechanische Wandlerelement über die Anpassungsschicht geerdet Aus der Druckschrift US7628081-B1 ist ein Ultraschallwandler für ein Ultraschall-Durchflussmessgerät bekannt, der ein leitendes Gehäuse und ein elektrisch leitendes akustisches Fenster umfasst, das als Metallzylinder mit einem geschlossenen Ende ausgebildet ist.

Ausgehend von diesem Stand der Technik liegt der vorliegenden Erfindung die Aufgabe zugrunde, einen Ultraschallwandler anzugeben, welcher die Transmission eines besonders hohen Signalanteils der Ultraschallsignale in das zu vermessende Medium gewährleistet und gleichzeitig eine hohe Betriebssicherheit bei einem besonders einfachen Aufbau bereitstellt.

Der Träger ist zumindest teilweise elektrisch leitfähig, der Träger und das Gehäuse sind elektrisch leitend miteinander verbunden und das elektromechanische Wandlerelement und der Träger sind elektrisch leitend miteinander verbunden.

Die Ausgestaltung des Trägers ist derart, dass er einerseits eine an die Umgebung angepasste Impedanz aufweist und darüber hinaus elektrisch leitfähig ist, sodass auf zusätzliche leitende Verbindungselemente beispielsweise zwischen dem Gehäuse und dem elektromechanischen Wandlerelement verzichtet werden kann. Hierdurch kann ein betriebssicherer Ultraschallwandler in besonders einfacher Ausgestaltung bereitgestellt werden.

Das Gehäuse ist vorzugsweise derart ausgebildet, dass es im eingebauten Zustand in ein Durchflussmessgerät mit dem Massepotential des Durchflussmessgerätes leitend verbunden ist. In der Folge ist das elektromechanische Wandlerelement auf besonders einfache Weise über den Träger und das Gehäuse geerdet, wobei auf zusätzliche Elemente zur Erdung insbesondere auf eine zusätzliche Masseleitung verzichtet werden kann.

Gemäß einer ersten Ausgestaltung ist der erfindungsgemäße Ultraschallwandler ein miniaturisierter Ultraschallwandler. Die dargelegten Probleme bezüglich der Übertragung der erzeugten Ultraschallsignale in das zu vermessende Medium sowie die Bereitstellung einer hohen Betriebssicherheit ergeben sich aufgrund der geringen Abmessungen insbesondere bei miniaturisierten Ultraschallwandlern.

Das elektrisch leitfähige Material des Gehäuses ist vorzugsweise ein Metall oder eine Metalllegierung.

Gemäß einer weiteren Ausgestaltung des erfindungsgemäßen Ultraschallwandlers ist das elektromechanische Wandlerelement zumindest bereichsweise unmittelbar mit dem Träger elektrisch leitend verbunden. Dabei wird unter einer unmittelbaren Verbindung verstanden, dass keine weiteren Verbindungselemente zwischen dem Wandlerelement und dem Träger vorgesehen sind. Ein betriebssicherer Ultraschallwandler wird gemäß dieser Ausgestaltung auf besonders einfache Weise bereitgestellt.

Das Trägermaterial besteht zumindest teilweise aus einem leitfähigen Polymer, insbesondere aus leitfähigem PEEK. Die Ausgestaltung des Trägermaterials aus einem Polymer hat den Vorteil, dass aufgrund der niedrigen akustischen Impedanz des Polymers eine besonders hohe Transmission der Ultraschallsignale in das strömende Medium gewährleistet werden kann. Darüber hinaus weist ein aus einem Polymer bestehender Träger eine chemische Beständigkeit auch für solche Anwendungen auf, in denen der Einsatz von beispielsweise Metall als Trägermaterial nicht möglich ist. Gleichzeitig kann die Leitfähigkeit des leitfähigen Polymers in vorteilhafter Weise genutzt werden, um die Betriebsicherheit des Ultraschallwandlers zu gewährleisten. Alternativ besteht das Trägermaterial aus einem leitfähigen Keramikmaterial. Weist das Gehäuse des Ultraschallwandlers das Massepotential auf, wird gleichzeitig eine besonders einfache Erdung des Wandlerelementes bereitgestellt.

Ebenfalls bevorzugt ist es, wenn das Trägermaterial zumindest teilweise aus einem mit Kohlenstofffasern verstärkten Polymer, insbesondere aus mit Kohlenstofffasern verstärktem PEEK, besteht. Die zuvor dargelegten Vorteile gelten insbesondere für eine derartige Ausgestaltung des erfindungsgemäßen Ultraschallwandlers. Darüber hinaus weist diese Ausgestaltung den zusätzlichen Vorteil auf, dass die Verstärkung des Polymers mit Kohlenstofffasern die Festigkeit des Trägers erhöht.

Gemäß einer weiteren Ausgestaltung weist der Träger eine leitfähige Schicht auf, wobei das Trägermaterial an der Innenseite des Trägers zumindest teilweise mit der leitfähigen Schicht beschichtet ist. Die Innenseite des Trägers ist dabei die dem elektromechanischen Wandlerelement zugewandte Seite. Um den Einfluss der leitfähigen Beschichtung auf die Transmission des Ultraschallsignals durch den Träger zu reduzieren, ist die Dicke der leitenden Schicht vorzugsweise zumindest bereichsweise kleiner als die Wellenlänge der von dem elektromechanischen Wandlerelement erzeugten Ultraschallsignale. Durch diese dünne Ausgestaltung der leitfähigen Schicht wird gleichzeitig gewährleistet, dass die Schicht elastisch genug ist, um nicht bei Verformungen des Trägers wie z.B. bei der Erzeugung der Ultraschallsignale zu brechen. Besonders bevorzugt ist die Dicke der leitfähigen Schicht konstant. Darüber hinaus ist es ebenfalls vorteilhaft, wenn die Dicke der leitfähigen Schicht bereichsweise variiert. Gemäß einer Ausgestaltung ist die Dicke der leitfähigen Schicht im Bereich des akustischen Fensters besonders gering, vorzugsweise geringer als die Wellenlänge der erzeugten Ultraschallsignale. Dann ist der Einfluss auf die Übertragung des Ultraschallsignals besonders gering.

Ist das Trägermaterial zumindest teilweise mit einer leitfähigen Schicht versehen, so muss das Trägermaterial selbst nicht leitfähig sein. Vorzugsweise ist das Trägermaterial in diesem Fall ein nichtleitfähiges Polymer oder ein nichtleitfähiges Keramikmaterial. Durch die Beschichtung mit einer leitfähigen Schicht ist der Träger dann insgesamt leitfähig. Weiterhin ist es ebenfalls bevorzugt, dass ein leitfähiges Trägermaterial zumindest teilweise mit einer leitfähigen Schicht beschichtet ist. Hierdurch wird die Leitfähigkeit des Trägers weiter erhöht, ohne die Transmission des Ultraschallsignals durch den Träger wesentlich zu beeinflussen.

Besonders bevorzugt ist die leitfähige Schicht eine metallische Schicht. Ebenfalls bevorzugt ist es, wenn die leitfähige Schicht auf das Trägermaterial aufgedampft ist.

Gemäß einer weiteren Ausgestaltung ist der Träger über die leitfähige Schicht mit dem Gehäuse elektrisch leitend verbunden.

Gemäß einer ebenfalls vorteilhaften Ausgestaltung des erfindungsgemäßen Ultraschallwandlers sind ein Entladungswiderstand, ein Elektrodenstempel, eine Signalleitung und mindestens ein geringfügig leitendes Verbindungselement vorgesehen, wobei das elektromechanische Wandlerelement über den Elektrodenstempel mit der Signalleitung elektrisch verbunden ist und wobei der Entladungswiderstand dadurch realisiert ist, dass der Elektrodenstempel und/oder das elektromechanische Wandlerelement über das mindestens eine geringfügig leitende Verbindungselement mit dem Träger elektrisch leitend verbunden sind, bzw. ist. Eine solche geringfügig leitende Verbindung ist beispielsweise dadurch bereitgestellt, dass ursprünglich isolierende Elemente, welche den Elektrodenstempel und/oder das Wandlerelement von dem Träger elektrisch isolieren, eine geringe Leitfähigkeit aufweisen. In diesem Fall kann auf den Einsatz weiterer Elemente, welche den Entladungswiderstand realisieren, verzichtet werden. Besonders bevorzugt ist es, wenn das mindestens eine geringfügig leitfähige Verbindungselement durch eine geringfügig leitfähige Schicht und/oder einen geringfügig leitfähigen O-Ring realisiert ist. Durch die Bereitstellung eines Entladungswiderstandes wird der Abbau von unerwünschten Spannungen auf dem elektromechanischen Wandlerelement gewährleistet, welche beispielsweise durch Temperaturschwankungen auftreten. Dabei ist die Höhe des Entladungswiderstandes vorzugsweise so zu wählen, dass die Funktionalität des elektromechanischen Wandlerelementes z.B. beim Ansteuern nicht beeinträchtigt wird.

Vorzugsweise besteht das mindestens eine geringfügig leitende Verbindungselement aus einem geringfügig leitfähigen Polymer.

Im Einzelnen ist eine Vielzahl von Möglichkeiten gegeben, den erfindungsgemäßen Ultraschallwandler auszugestalten und weiterzubilden. Dazu wird verwiesen auf die dem Patentanspruch 1 nachgeordneten Patentansprüche und auf die nachfolgende Beschreibung der bevorzugten Ausführungsbeispiele in Verbindung mit der Zeichnung. In der Zeichnung zeigt
- Fig. 1: ein erstes Ausführungsbeispiel eines Ultraschallwandlers,
- Fig. 2: ein zweites Ausführungsbeispiel eines Ultraschallwandlers,
- Fig. 3: ein drittes Ausführungsbeispiel eines Ultraschallwandlers und
- Fig. 4: ein viertes Ausführungsbeispiel eines Ultraschallwandlers.

In der Zeichnung werden gleiche Bezugszeichen für gleiche Elemente verwendet.

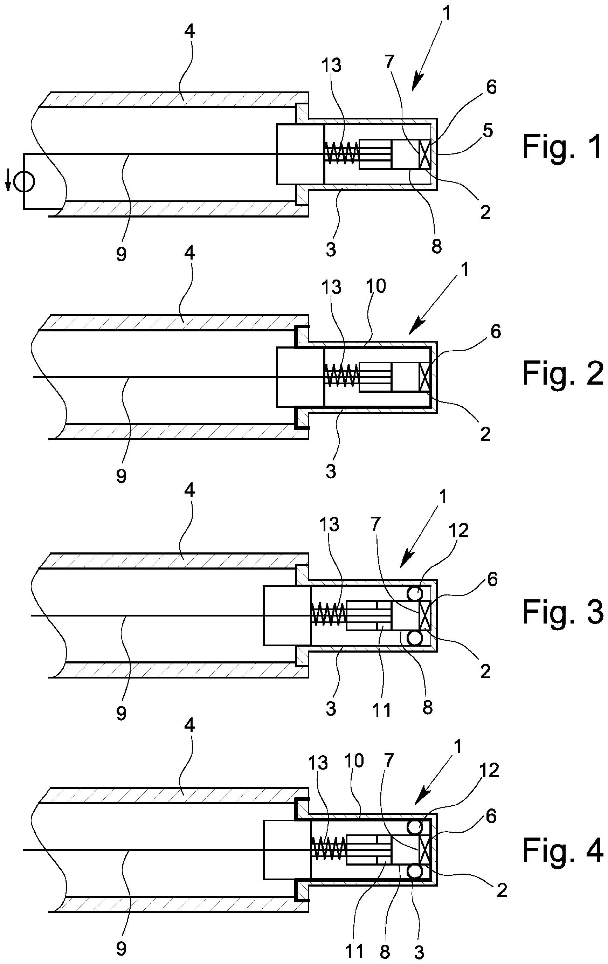

Fig. 1 zeigt ein erstes Ausführungsbeispiel eines Ultraschallwandlers 1 für den Einbau in ein Ultraschall-Durchflussmessgerät zur Messung des Durchflusses eines strömenden Mediums. Der dargestellte Ultraschallwandler 1 weist ein elektromechanisches Wandlerelement 2, welches in einem Träger 3 angeordnet ist und ein Gehäuse 4 auf, wobei sowohl der Träger 3 als auch das Gehäuse 4 elektrisch leitfähig sind. Vorliegend besteht der Träger 3 aus einem elektrisch leitfähigen Polymer. Das Gehäuse 4 ist aus Metall. Zudem sind der Träger 3 und das Gehäuse 4 elektrisch leitend miteinander verbunden.

Das elektromechanische Wandlerelement 2 weist über eine erste Oberfläche 6 unmittelbaren Kontakt, d.h. ohne die Verwendung weiterer Verbindungselemente, mit dem Träger 3 auf. Zudem ist das elektromechanische Wandlerelement über eine zweite Oberfläche 7 mit einem Elektrodenstempel 8 und dieser mit einer Signalleitung 9 verbunden. Zur Erzeugung von Ultraschallsignalen wird über die Signalleitung 9 und das Gehäuse 4 bzw. den Träger 3 an das elektromechanische Wandlerelement 2 eine Spannung angelegt, die von dem Wandlerelement 2 in ein Ultraschallsignal umgewandelt wird. Zudem ist das elektromechanische Wandlerelement 2 mittels eines Federelementes 13 gegen den Träger 3 vorgespannt.

Darüber hinaus ist das Gehäuse 4 derart ausgestaltet, dass es im eingebauten Zustand in ein Durchflussmessgerät eine leitende Verbindung zum Massepotential des Durchflussmessgerätes herstellt. Durch den Kontakt des Trägers 3 mit dem Gehäuse 4 ist das elektromechanische Wandlerelement 2 im eingebauten Zustand auf besonders einfache Weise über den Träger 3 geerdet.

Der Träger 3 steht im Betrieb des Ultraschallwandlers 1 zumindest teilweise in Kontakt mit dem nicht dargestellten zu vermessenden strömenden Medium. Dabei erfolgt die Übertragung des von dem elektromechanischen Wandlerelement 2 erzeugten Ultraschallsignals in das strömende Medium über ein akustisches Fenster 5, welches im vorderen Bereich des Trägers 3 angeordnet ist. Um die Transmission eines besonders hohen Signalanteils in das strömende Medium zu gewährleisten, besteht der Träger 3 aus einem Trägermaterial, dessen Wert der akustischen Impedanz zwischen dem Wert der akustischen Impedanz des elektromechanischen Wandlerelements 2 und dem Wert der akustischen Impedanz des strömenden Mediums liegt. Im dargestellten Ausführungsbeispiel besteht der Träger 3 aus einem leitfähigen Polymer. So wird durch den dargestellten Ultraschallwandler 1 einerseits aufgrund der Impedanzanpassung an die den Träger 3 umgebenden Materialien ein verlustarmer Übergang des von dem elektromechanischen Wandlerelement 2 erzeugten Ultraschallsignals in das strömende Medium garantiert, andererseits ist das elektromechanische Wandlerelement 2 über den Träger 3 und das Gehäuse 4 auf besonders einfache Weise geerdet, wodurch eine hohe Betriebssicherheit gewährleistet wird.

Fig. 2 zeigt ein zweites Ausführungsbeispiel eines Ultraschallwandlers 1. Der dargestellte Ultraschallwandler 1 weist ein elektromechanisches Wandlerelement 2, welches in einem Träger 3 angeordnet ist und ein Gehäuse 4 auf, wobei der Träger 3 aus einem Trägermaterial besteht, dessen Wert der akustischen Impedanz zwischen dem Wert der akustischen Impedanz des elektromechanischen Wandlerelements 2 und dem Wert der akustischen Impedanz des zu vermessenden strömenden Mediums liegt. Das Gehäuse 4 ist aus Metall und ist derart ausgestaltet, dass es im eingebauten Zustand in ein Durchflussmessgerät das Massepotential für das Wandlerelement 2 aufweist.

Im Unterschied zu dem in Fig. 1 dargestellten Ultraschallwandler 1 besteht das Trägermaterial aus einem nichtleitfähigen Polymer, wodurch eine besonders hohe Transmission des von dem elektromechanischen Wandlerelementes 2 erzeugten Ultraschallsignals in das strömende Medium gewährleistet ist. An der Innenseite, d.h. an der Seite des Trägers 3, die dem elektromechanischen Wandlerelement 2 zugewandt ist, ist das Trägermaterial mit einer leitfähigen, metallische Schicht 10 beschichtet. Über diese leitfähige Schicht 10 ist der Träger 3 mit dem Gehäuse 4 elektrisch leitend verbunden. Die Dicke der leitfähigen Schicht 10 ist dabei geringer als die Wellenlänge der von dem elektromechanischen Wandlerelement 2 erzeugten Ultraschallsignale, sodass einerseits gewährleistet wird, dass ein Einfluss der Beschichtung auf die Transmission der Ultraschallsignale durch den Träger 3 im Wesentlichen vermieden wird. Andererseits ist durch die Beschichtung mit einer derart dünnen Schicht sichergestellt, dass die Schicht eine genügend hohe Elastizität aufweist, um nicht bei Verformungen des Trägers 3 beispielsweise bei der Erzeugung der Ultraschallsignale zu brechen.

Das elektromechanische Wandlerelement 2 weist über eine erste Oberfläche 6 unmittelbaren Kontakt mit dem Träger 3, insbesondere mit der Schicht 10 des Trägers auf. Durch den Kontakt mit dem Träger 3 ist das elektromechanische Wandlerelement 2 im eingebauten Zustand über den Träger 3 und das Gehäuse 4 geerdet. Insofern stellt dieses Ausführungsbeispiel ebenfalls einen Ultraschallwandler 1 bereit, welcher auf besonders einfache Weise geerdet ist und gleichzeitig die Transmission eines besonders hohen Signalanteils der Ultraschallsignale gewährleistet.

Fig. 3 zeigt ein drittes Ausführungsbeispiel eines Ultraschallwandlers 1, wobei der Ultraschallwandler 1 ein elektromechanisches Wandlerelement 2, welches in einem Träger 3 angeordnet ist und ein Gehäuse 4 aufweist, wobei der Träger 3 aus einem Trägermaterial besteht, dessen Wert der akustischen Impedanz zwischen dem Wert der akustischen Impedanz des elektromechanischen Wandlerelements 2 und dem Wert der akustischen Impedanz des strömenden Mediums liegt. Sowohl der Träger 3 als auch das Gehäuse 4 sind elektrisch leitfähig. Vorliegend besteht der Träger 3 aus einem elektrisch leitfähigen Polymer. Das Gehäuse 4 ist aus Metall. Zudem sind der Träger 3 und das Gehäuse 4 leitend miteinander verbunden. Das elektromechanische Wandlerelement 2 weist über eine erste Oberfläche 6 unmittelbaren Kontakt mit dem Träger 3 auf. Über ein Federelement 13 ist das elektromechanische Wandlerelement 2 gegen den Träger 3 vorgespannt.

Zudem ist das elektromechanische Wandlerelement 2 über einen Elektrodenstempel 8 mit einer Signalleitung 9 verbunden. Zur Erzeugung von Ultraschallsignalen wird über die Signalleitung 9 und das Gehäuse 4 bzw. den Träger 3 an das elektromechanische Wandlerelement 2 eine Spannung angelegt, die von dem Wandlerelement 2 in ein Ultraschallsignal umgewandelt wird. Zur Vermeidung eines Kurzschlusses sind der Elektrodenstempel 8 und die zweite Oberfläche 7 des elektromechanischen Wandlerelementes 2 durch widerstandsbehaftete Elemente, vorliegend durch die geringfügig leitfähigen Verbindungselemente 11 und 12 von dem Träger 3 getrennt. Die Verbindungselemente 11 und 12 sind vorliegend durch eine geringfügig leitfähige Schicht und durch einen geringfügig leitfähigen O-Ring ausgestaltet. Durch den O-Ring wird das elektromechanische Wandlerelement 2 zusätzlich innerhalb des Trägers 3 zentral angeordnet.

Zur Abführung von unerwünschten Spannungen auf dem elektromechanischen Wandlerelement 2 weist der dargestellte Ultraschallwandler 1 einen Entladungswiderstand auf, über den sich das elektromechanische Wandlerelement 2 entlädt, wenn an dem Wandlerelement 2 keine Spannung anliegt. Vorliegend ist der Entladungswiderstand dadurch bereitgestellt, dass der Elektrodenstempel 8 und das elektromechanische Wandlerelement 2 über geringfügig leitende Verbindungselemente 11 und 12 mit dem Träger 3 verbunden sind. Dabei wird unter einer geringfügig leitenden Verbindung verstanden, dass der Widerstand der Verbindung so hoch ist, dass der Betrieb des elektromechanischen Wandlerelements 2 nicht beeinflusst wird. Vorliegend bestehen die Elemente 11 und 12 dazu aus einem geringfügig leitfähigen Polymer.

Stellt das Gehäuse 4 im eingebauten Zustand zusätzlich eine leitende Verbindung zum Massepotential des Durchflussmessgerätes her, ist das elektromechanische Wandlerelement 2 zudem auf besonders einfache Weise über den Träger 3 geerdet.

Im Ergebnis zeigt Fig. 3 einen Ultraschallwandler 1, welche eine besonders hohe Betriebssicherheit bereitstellt, wobei gleichzeitig die Transmission eines besonders hohen Signalanteils des Ultraschallsignals in das zu vermessende Medium gewährleistet ist.

Fig. 4 zeigt ein viertes Ausführungsbeispiel eines Ultraschallwandlers 1, wobei der Ultraschallwandler 1 ein elektromechanisches Wandlerelement 2, welches in einem Träger 3 angeordnet ist und ein Gehäuse 4 aufweist, wobei der Träger 3 aus einem Trägermaterial besteht, dessen Wert der akustischen Impedanz zwischen dem Wert der akustischen Impedanz des elektromechanischen Wandlerelements 2 und dem Wert der akustischen Impedanz des zu vermessenden strömenden Mediums liegt. Das Gehäuse 4 ist aus Metall.

Das Trägermaterial des Trägers 3 besteht aus einem nichtleitfähigen Polymer, wodurch eine besonders hohe Transmission des Ultraschallsignals in das strömende Medium bereitgestellt wird. An der Innenseite des Trägers 3 ist das Trägermaterial mit einer metallische Schicht 10 beschichtet. Das elektromechanische Wandlerelement 2 ist über eine erste Oberfläche 6 mit dem Träger 3, insbesondere mit der Schicht 10, elektrisch leitend verbunden. Zudem ist der Träger 3 mit dem Gehäuse 4 über die metallische Schicht 10 elektrisch leitend verbunden.

Wie im zuvor dargestellten dritten Ausführungsbeispiel ist das elektromechanische Wandlerelement 2 über einen Elektrodenstempel 8 mit einer Signalleitung 9 verbunden und der Elektrodenstempel 8 und die mit der Signalleitung verbundene Seite des elektromechanischen Wandlerelementes 2 sind zur Vermeidung eines Kurzschlusses durch widerstandsbehaftete Elemente, vorliegend durch die geringfügig leitfähigen Verbindungselemente 11 und 12, welche vorliegend durch eine geringfügig leitfähige Schicht und einen geringfügig leitfähigen O-Ring ausgestaltet sind, von dem Träger 3 getrennt.

Darüber hinaus weist der Ultraschallwandler 1 ebenfalls einen Entladungswiderstand auf, über den sich das elektromechanische Wandlerelement 2 entlädt, wodurch der Aufbau von unerwünschten Spannungen beispielsweise aufgrund von Temperaturschwankungen vermieden wird. Der Entladungswiderstand wird auch vorliegend dadurch bereitgestellt, dass der Elektrodenstempel 8 und das elektromechanische Wandlerelement 2 über geringfügig leitende Verbindungselemente 11 und 12 mit dem Träger 3 verbunden sind. Unter einer geringfügig leitenden Verbindung wird weiterhin verstanden, dass der Widerstand der geringfügig leitenden Verbindungselemente 11 und 12 hoch genug ist, um den Betrieb des Wandlerelementes 2 nicht wesentlich zu beeinflussen. Die Elemente 11 und 12 bestehen dazu ebenfalls aus einem geringfügig leitfähigen Polymer.

Stellt das Gehäuse 4 im eingebauten Zustand zusätzlich eine leitende Verbindung zum Massepotential des Durchflussmessgerätes her, ist das elektromechanische Wandlerelement 2 zudem auf besonders einfache Weise über den Träger 3 geerdet.

Im Ergebnis stellt auch dieses Ausführungsbeispiel einen Ultraschallwandler 1 bereit, welcher zum einen eine hohe Transmission des Ultraschallsignals in das Medium gewährleistet und zum anderen durch die einfache Erdung und die Ableitung unerwünschter Spannungen einen besonders sicheren Betrieb des Ultraschallwandlers 1 ermöglicht.

### Bezugszeichen:

- 1: Ultraschallwandler
- 2: Elektromechanisches Wandlerelement
- 3: Träger
- 4: Gehäuse
- 5: Akustisches Fenster
- 6: Erste Oberfläche des elektromechanischen Wandlerelementes
- 7: Zweite Oberfläche des elektromechanischen Wandlerelements
- 8: Elektrodenstempel
- 9: Signalleitung
- 10: Schicht
- 11: Verbindungselement
- 12: Verbindungselement
- 13: Federelement

## Patentansprüche

1. Ultraschallwandler (1) für den Einbau in ein Ultraschall-Durchflussmessgerät zur Messung des Durchflusses eines strömenden Mediums, umfassend ein elektromechanisches Wandlerelement (2) für die Erzeugung von Ultraschallsignalen, einen Träger (3) und ein Gehäuse (4), wobei das elektromechanische Wandlerelement in dem Träger (3) angeordnet ist, wobei das Gehäuse (4) zumindest teilweise aus einem elektrisch leitfähigen Material besteht, wobei der Träger (3) ein Trägermaterial mit einer akustischen Impedanz aufweist, wobei der Wert der akustischen Impedanz des Trägermaterials zwischen dem Wert der akustischen Impedanz des elektromechanischen Wandlerelements (2) und dem Wert der akustischen Impedanz des zu vermessenden strömenden Mediums liegt,
wobei der Träger (3) zumindest teilweise elektrisch leitfähig ist, wobei der Träger (3) und das Gehäuse (4) elektrisch leitend miteinander verbunden sind und wobei das elektromechanische Wandlerelement (2) und der Träger (3) elektrisch leitend miteinander verbunden sind,
**dadurch gekennzeichnet,**
**dadurch gekennzeichnet, dass** das Trägermaterial zumindest teilweise aus einem leitfähigen Polymer besteht oder dass das Trägermaterial aus einem leitfähigen Keramikmaterial besteht.

2. Ultraschallwandler (1) nach Anspruch 1, **dadurch gekennzeichnet, dass** das elektrisch leitfähige Material des Gehäuses (4) ein Metall oder eine Metalllegierung ist.

3. Ultraschallwandler (1) nach Anspruch 1 oder 2, **dadurch gekennzeichnet, dass** das elektromechanische Wandlerelement (2) zumindest bereichsweise unmittelbar mit dem Träger (3) elektrisch leitend verbunden ist.

4. Ultraschallwandler (1) nach einem der Ansprüche 1 bis 3, **dadurch gekennzeichnet, dass** für den Fall, dass das Trägermaterial zumindest teilweise aus einem leitfähigen Polymer besteht, das Trägermaterial zumindest teilweise aus einem mit Kohlenstofffasern verstärkten Polymer besteht.

5. Ultraschallwandler (1) nach einem der Ansprüche 1 bis 4, **dadurch gekennzeichnet, dass** der Träger (3) eine leitfähige Schicht (10) aufweist, und dass das Trägermaterial an der Innenseite des Trägers (3) zumindest teilweise mit der leitfähigen Schicht (10) beschichtet ist.

6. Ultraschallwandler (1) nach Anspruch 5, **dadurch gekennzeichnet, dass** die Dicke der leitfähigen Schicht (10) zumindest bereichsweise kleiner als die Wellenlänge der von dem elektromechanischen Wandlerelement (2) erzeugten Ultraschallsignale ist.

7. Ultraschallwandler (1) nach Anspruch 5 oder 6, **dadurch gekennzeichnet, dass** die leitfähige Schicht (10) eine metallische Schicht ist.

8. Ultraschallwandler (1) nach einem der Ansprüche 5 bis 7, **dadurch gekennzeichnet, dass** der Träger (3) über die leitfähige Schicht (10) mit dem Gehäuse (4) elektrisch leitend verbunden ist.

9. Ultraschallwandler (1) nach einem der Ansprüche 1 bis 8, **dadurch gekennzeichnet, dass** ein Entladungswiderstand, ein Elektrodenstempel (8), eine Signalleitung (9) und mindestens ein geringfügig leitendes Verbindungselement (11, 12) vorgesehen sind, wobei das elektromechanische Wandlerelement (2) über den Elektrodenstempel (8) mit der Signalleitung (9) elektrisch verbunden ist und dass der Entladungswiderstand dadurch realisiert ist, dass der Elektrodenstempel (8) und/oder das elektromechanische Wandlerelement (2) über das mindestens eine geringfügig leitende Verbindungselement (11, 12) mit dem Träger (3) elektrisch leitend verbunden sind bzw. ist.

10. Ultraschallwandler (1) nach Anspruch 9, **dadurch gekennzeichnet, dass** das mindestens eine geringfügig leitende Verbindungselement (11, 12) zumindest teilweise aus einem geringfügig leitfähigen Polymer besteht.

## Claims

1. Ultrasonic transducer (1) for mounting in an ultrasonic flowmeter for measuring the flow of a flowing medium, comprising an electromechanical transducer element (2) for generating ultrasonic signals, a carrier (3) and a housing (4), wherein the electromechanical transducer element (2) is arranged in the carrier (3), wherein the housing (4) consists at least in part of an electroconductive material, wherein the carrier (3) has a carrier material with an acoustic impedance, wherein the acoustic impedance value of the carrier material lies between the acoustic impedance value of the electromechanical transducer element (2) and the acoustic impedance value of the flowing medium to be measured,
wherein the carrier (3) is at least partially electroconductive, wherein the carrier (3) and the housing (4) are electroconductively connected to one another and wherein the electromechanical transducer element (2) and the carrier (3) are electroconductively connected to one another,
**characterized in**
**that** the carrier material consists in least in part of a conductive polymer or that the carrier material consists of a conductive ceramic materal.

2. Ultrasonic transducer (1) according to claim 1, **characterized in that** the electroconductive material of the housing (4) is a metal or a metal alloy.

3. Ultrasonic transducer (1) according to claim 1 or 2, **characterized in that** the electromechanical transducer element (2) is electroconductively connected directly, at least in sections, to the carrier.

4. Ultrasonic transducer (1) according to any one of claims 1 to 3, **characterized in that**, in the case that the carrier material consists at least partially of a conductive polymer, the carrier material consists at least partially of a polymer reinforced with carbon fibers.

5. Ultrasonic transducer (1) according to any one of claims 1 to 4, **characterized in that** the carrier (3) has a conductive layer (10) and that the carrier material on the inside of the carrier (3) is coated at least partially with the conductive layer (10).

6. Ultrasonic transducer (1) according to claim 5, **characterized in that** the thickness of the conductive layer (10) is, at least in sections, less than the wavelength of the ultrasonic signal generated by the electromagnetic transducer element (2).

7. Ultrasonic transducer (1) according to claim 5 or 6, **characterized in that** the conductive layer (10) is a metallic layer.

8. Ultrasonic transducer (1) according to any one of claims 5 to 7, **characterized in that** the carrier (3) is electroconductively connected to the housing (4) via the conductive layer (10).

9. Ultrasonic transducer (1) according to any one of claims 1 to 8, **characterized in that** a discharging resistance, an electrode stamp (8), a signal line (9) and at least one marginally conductive connecting element (11, 12) are provided, wherein the electromechanical transducer element (2) is electrically connected to the signal line (9) via the electrode stamp (8) and that the discharging resistance is implemented **in that** the electrode stamp (8) and/or the electromagnetic transducer element (2) is/are electroconductively connected to the carrier (3) via the at least one marginally conductive connecting element (11, 12).

10. Ultrasonic transducer (1) according to claim 9, **characterized in that** the at least one marginally conductive connecting element (11, 12) consists at least partially of a marginally conductive polymer.

## Revendications

1. Transducteur à ultrasons (1) destiné à être installé dans un débitmètre à ultrasons pour mesurer le débit d'un milieu en écoulement, ledit transducteur comprenant un élément transducteur électromécanique (2) destiné à générer des signaux ultrasonores, un support (3) et un boîtier (4), l'élément transducteur électromécanique étant disposé dans le support (3), le boîtier (4) étant au moins partiellement en matériau électriquement conducteur, le support (3) comportant un matériau de support ayant une impédance acoustique, la valeur de l'impédance acoustique du matériau de support étant comprise entre la valeur de l'impédance acoustique de l'élément transducteur électromécanique (2) et la valeur de l'impédance acoustique du milieu en écoulement à mesurer,
le support (3) étant au moins partiellement électriquement conducteur, le support (3) et le boîtier (4) étant reliés électriquement l'un à l'autre, et l'élément transducteur électromécanique (2) et le support (3) étant reliés électriquement l'un à l'autre,
**caractérisé en ce que**
le matériau de support est au moins partiellement en polymère conducteur ou **en ce que** le matériau de support est en matériau céramique conducteur.

2. Transducteur à ultrasons (1) selon la revendication 1, **caractérisé en ce que** le matériau électriquement conducteur du boîtier (4) est un métal ou un alliage métallique.

3. Transducteur à ultrasons (1) selon la revendication 1 ou 2, **caractérisé en ce que** l'élément transducteur électromécanique (2) est au moins partiellement relié électriquement directement au support (3).

4. Transducteur à ultrasons (1) selon l'une des revendications 1 à 3, **caractérisé en ce que**, dans le cas où le matériau de support est au moins partiellement en polymère conducteur, le matériau de support est au moins partiellement en polymère renforcé de fibres de carbone.

5. Transducteur à ultrasons (1) selon l'une des revendications 1 à 4, **caractérisé en ce que** le support (3) comporte une couche conductrice (10), et **en ce que** le matériau de support est revêtu du côté intérieur du support (3) au moins partiellement de la couche conductrice (10).

6. Transducteur à ultrasons (1) selon la revendication 5, **caractérisé en ce que** l'épaisseur de la couche conductrice (10) est au moins par endroits inférieure à la longueur d'onde des signaux ultrasonores générés par l'élément transducteur électromécanique (2).

7. Transducteur à ultrasons (1) selon la revendication 5 ou 6, **caractérisé en ce que** la couche conductrice (10) est une couche métallique.

8. Transducteur à ultrasons (1) selon l'une des revendications 5 à 7, **caractérisé en ce que** le support (3) est relié électriquement au boîtier (4) par le biais de la couche conductrice (10).

9. Transducteur à ultrasons (1) selon l'une des revendications 1 à 8, **caractérisé en ce qu'**une résistance de décharge, un poinçon d'électrode (8), une ligne de signal (9) et au moins un élément de liaison légèrement conducteur (11, 12) sont prévus, l'élément transducteur électromécanique (2) étant relié électriquement à la ligne de signal (9) par le biais du poinçon d'électrode (8) et **en ce que** la résistance de décharge est réalisée du fait que le poinçon d'électrode (8) et/ou l'élément transducteur électromécanique (2) sont reliés électriquement au support (3) par le biais de l'au moins un élément de liaison légèrement conducteur (11, 12).

10. Transducteur à ultrasons (1) selon la revendication 9, **caractérisé en ce que** l'au moins un élément de liaison légèrement conducteur (11, 12) est au moins partiellement en polymère légèrement conducteur.
